# EUROPÄISCHE PATENTANMELDUNG

(11) **EP 3 205 247 A1**
(43) Veröffentlichungstag der Anmeldung: **16.08.2017**
(21) Anmeldenummer: 17154996.7
(22) Anmeldetag: 07.02.2017
(51) Int. Cl.: A47K 10/38

(54) **KÜCHENROLLENHALTER**

(30) Priorität: 11.02.2016 DE 202016100679 U
(71) Anmelder: Wenko-Wenselaar GmbH & Co. KG, 40721 Hilden (DE)
(72) Erfinder: Köllner, Niklas, 40721 Hilden (DE)
(74) Vertreter: Kreuzkamp, Markus

(57) **Zusammenfassung**

Küchenrollenhalter für aufgewickelte Material-Bahnen mit Hohlzylinder-Kern, wobei der Küchenrollenhalter einen flachen, vom Nutzer her betrachtet vorderseitig auskragenden Außenwandabschnitt mit Kreisbogenprofil aufweist, wobei wiederum die Halterungsposition einer neuen Küchenrolle konzentrisch zum Kreisbogenprofil angeordnet ist und eine neue Küchenrolle in gehalterter Position in der konkaven, innenseitigen Wölbung des Kreisbogenprofils angeordnet ist, wobei der Außenwandabschnitt rückseitig und vom Nutzer her betrachtet hinter der Küchenrolle in eine flächig erstreckte Platte übergeht, welche eine Zusatzfunktion aufweist.

## Beschreibung

### TECHNISCHER BEREICH

Die vorliegende Erfindung betrifft Küchenrollenhalter gemäß dem Oberbegriff der unabhängigen Ansprüche. Der technische Bereich ist somit im Bereich der Halterungen für abrollbare Materialbahnen im privaten Wohn- und Koch-Bereich angesiedelt. Solche Halterungen sehen häufig eine Abreißkante vor, welche nahe zu einem Freiraum angeordnet werden muss. Die Materialbahn wird in den Freiraum hinein abgezogen und anschließend - vorzugsweise mittels der Abreißkante - in gewünschter Länge abgetrennt. Zusätzliche Ordnungs- und Vorrats-Funktionen sind dabei möglich, wie es zum Beispiel in der DE 40 13 935 C2 beschrieben ist. Konkret betrifft die vorliegende Erfindung einen Küchenrollenhalter.

### BESCHREIBUNG DES STANDES DER TECHNIK

Gattungsgemäße Küchenrollenhalter sind schon länger Gegenstand der Entwicklung und Verbesserung. So offenbart die EP 599 493 A1 einen an einer Wand zu befestigenden Küchenrollenhalter, bei dem eine Küchenrolle auf einer horizontalen Achse und unterhalb zu weiteren, bevorrateten Material-Rollen, angeordnet ist. Der Freiraum zum Abziehen einer Materialbahn liegt in der dort veranschaulichten Bauweise vom Nutzer her betrachtet unterhalb der Küchenrolle, wobei im Sinne der vorliegenden Erfindung die einem Nutzer zugewandte Seite als Vorderseite angesehen wird, während Elemente, welche vom Nutzer her gesehen hinter der Küchenrolle angeordnet sind, als rückseitig angesehen werden; somit wäre der hier diskutierte Küchenrollenhalter des Standes der Technik rückseitig an der Wand zu befestigen und bietet vorderseitig Zugang zur gehalterten Küchenrolle, welche unterseitig und horizontal in der Vorrichtung angeordnet ist. Aus der DE 20 2011 000 310 U1 ist ergänzend eine verbesserte Aufnahme-Vorrichtung bekannt, welche entsprechende Rollen über ein C-Profil mit anteilig eintauchenden Zapfen zu haltern vermag.

Nachteilig ist bei den gattungsgemäßen Küchenrollenhaltern, dass ein Freiraum mindestens auf eine der beiden an die Rolle angrenzenden Seiten ausgerichtet wird, aber der Freiraum selbst dabei regelmäßig ungenutzt bleibt. Besonders nachteilig ist, wenn der Freiraum als bloße, angrenzende, frei liegende Wandfläche vorgesehen wird, denn durch regelmäßiges Berühren der Wand wird diese schnell unansehnlich und ist - gerade bei Tapeten- und Putz-Oberflächen - nur schwierig zu reinigen.

Aufgabe der vorliegenden Erfindung war es daher, die Nachteile des Standes der Technik zu überwinden und einen verbesserten Küchenrollenhalter bereitzustellen, welcher den vorbeschriebenen Nachteilen wirksam zu begegnen vermag.

Die Lösung dieser Aufgabe erfolgt gemäß der Merkmale der unabhängigen Ansprüche. Vorteilhafte Ausführungsformen ergeben sich aus den abhängigen Ansprüchen sowie der nachfolgenden Beschreibung.

### ZUSAMMENFASSUNG DER ERFINDUNG

Erfindungsgemäß weist ein Küchenrollenhalter einen flachen, vom Nutzer her betrachtet vorderseitig auskragenden Außenwandabschnitt mit Kreisbogenprofil auf, wobei wiederum die Halterungsposition einer neuen Küchenrolle konzentrisch zum Kreisbogenprofil angeordnet ist und eine neue Küchenrolle in gehalterter Position in der konkaven, innenseitigen Wölbung des Kreisbogenprofils angeordnet ist Wesentlich ist, dass der Außenwandabschnitt rückseitig und vom Nutzer her betrachtet hinter der Küchenrolle in eine flächig erstreckte Platte übergeht, welche eine Zusatzfunktion aufweist.

### BESCHREIBUNG DER ERFINDUNG UND VORTEILHAFTER MERKMALE

Ein Küchenrollenhalter für aufgewickelte Material-Bahnen sieht einen Hohlzylinder-Kern vor; gerade bei Küchenrollen hat sich ein Hohlzylinder-Kern aus Pappe etabliert, auf welchen die abschnittsweise häufig vorperforierte Zellulosebahn des Küchenpapiers aufgerollt ist. Der Küchenrollenhalter weist einen flachen, vom Nutzer her betrachtet vorderseitig auskragenden Außenwandabschnitt mit Kreisbogenprofil auf. Das Kreisbogenprofil kann bei horizontaler Ausrichtung konkav zum Betrachter hin wie ein U-gewölbt sein oder konvex wie die Außenseite eines Zylinders gewölbt sein. In jedem Fall ist die Halterungsposition einer neuen Küchenrolle konzentrisch zum Kreisbogenprofil angeordnet. Das Kreisbogenprofil umschließt die neue Küchenrolle in gehalterter Position, bevorzugt über die ganze Länge der Küchenrolle hinweg; besonders bevorzugt weist das Kreisbogenprofil als längs erstreckte, über die gesamte Länge der Küchenrolle reichendes Profil eine durchgehende, gerade Schlusskante auf, welche Vorteilhaft als Abreißkante dienen kann. Die in der konkaven, innenseitigen Wölbung des Kreisbogenprofils angeordnete Küchenrolle ist bei übergreifendem Kreisbogenprofil oder bei vertikaler Ausrichtung in bekannter Weise auf Zapfen oder auf einer Achse gehaltert, während bei konkav und horizontal untergreifender Anordnung eine neue Küchenrolle lediglich in die umschließende Hohlform eingelegt werden muss. Der Außenwandabschnitt geht rückseitig zur Küchenrolle und vom Nutzer her betrachtet hinter der Küchenrolle in eine flächig erstreckte Platte über, welche eine Zusatzfunktion aufweist. Mithin wird erstmals ein Küchenrollenhalter vorgeschlagen, welcher den an die Küchenrolle gattungsgemäß angrenzenden Freiraum mit einer anschließenden Platte vorteilhaft abdeckt und gleichzeitig über die Platte einen geldwerten Zusatznutzen bereitstellt.

Bevorzugt ist der Küchenrollenhalter dadurch gekennzeichnet, dass die Platte mindestens eine Zusatzfunktion aufweist, welche ausgewählt ist aus der Gruppe bestehend aus Notizfläche, Magnetboardfläche, Whiteboardfläche, Spiegelfläche, Leuchtglasfläche, Thermometer-Anzeige-Fläche, LED-Uhr-Anzeigefläche, Touchscreen-Schalterfläche, Hygrometer-Anzeigefläche, LED-Bildschirm-Anzeigefläche, Leuchtglasfläche mit einstellbaren und/oder regelbaren Lichtquellen.

Bevorzugt ist der Küchenrollenhalter dadurch gekennzeichnet, dass das Kreisbogenprofil aus gebogenem Edelstahlblech besteht.

Bevorzugt ist der Küchenrollenhalter dadurch gekennzeichnet, dass die Platte aus Edelstahlblech besteht.

Bevorzugt ist der Küchenrollenhalter dadurch gekennzeichnet, dass Kreisbogenprofil und Platte aus dem gleichen Material bestehen.

Bevorzugt ist der Küchenrollenhalter dadurch gekennzeichnet, dass Kreisbogenprofil und Platte aus einem durchgehenden, kontinuierlichen Materialabschnitt, besonders bevorzugt aus Edelstahlblech, bestehen.

Bevorzugt ist der Küchenrollenhalter dadurch gekennzeichnet, dass der Küchenrollenhalter mindestens eine weitere Baugruppe aufweist, welche ausgewählt ist aus der Gruppe bestehend aus Abreißkante, Abschneidkante, Abreißklinge, Schneidmechanik, Rollenschneider, Hebelschneider, Rollen-Halterungsdorn, austauschbare Abrollachse, Frontklappe mit Abrollschlitz, rückseitige Wandbefestigungsöse, rückseitige Aufhängeöse, Standfuß, Standfußaufnahme.

Bevorzugt ist der Küchenrollenhalter dadurch gekennzeichnet, dass der Küchenrollenhalter eine weitere Rollenaufnahme für eine weitere Rolle aufweist.

Bevorzugt ist der Küchenrollenhalter dadurch gekennzeichnet, dass der Küchenrollenhalter ein Magazin für Ersatzrollen und/oder Ersatz-Küchenrollen aufweist.

Weitere Vorteile ergeben sich aus den Ausführungsbeispielen. Es versteht sich, dass die vorbeschriebenen, bevorzugten Merkmale, Vorteile und nachfolgenden Ausführungsbeispiele nicht beschränkend aufzufassen sind. Vorteilhafte oder bevorzugte, zusätzliche Merkmale und zusätzliche Merkmalskombinationen, wie sie in der Beschreibung erläutert sind, können im Rahmen der unabhängigen Ansprüche im beanspruchten Gegenstand sowohl einzeln als auch abweichend kombiniert verwirklicht werden, ohne dass der Bereich der Erfindung verlassen würde.

### DETAILLIERTE ERLÄUTERUNG DER ERFINDUNG AN HAND VON AUSFÜHRUNGBEISPIELEN

In vorteilhafter Ausführungsform weist ein Küchenrollenhalter für aufgewickelte Material-Bahnen mit Hohlzylinder-Kern ein flächig erstrecktes, vom Nutzer her betrachtet vorderseitig auskragendes Kreisbogenprofil auf und die Halterungsposition einer neuen Küchenrolle ist konzentrisch zum Kreisbogenprofil angeordnet. Eine neue Küchenrolle ist somit in gehalterter Position in der konkaven, innenseitigen Wölbung des Kreisbogenprofils angeordnet. Das Kreisbogenprofil geht rückseitig und vom Nutzer her betrachtet hinter der Küchenrolle in eine flächig erstreckte Platte mit rückseitiger Wandbefestigung über, wobei die Platte vorderseitig als Notizfläche, Magnetboardfläche und/oder Spiegelfläche ausgebildet ist, wobei wiederum das Kreisbogenprofil aus gebogenem Edelstahlblech besteht, die Platte aus Edelstahlblech besteht und Kreisbogenprofil und Platte aus einem durchgehenden, kontinuierlichen Materialabschnitt bestehen. Somit wird eine an den Küchenrollenhalter angrenzende und im notwendigen Freiraum liegende Fläche einer Wand schützend abgedeckt und ist selbst im Falle einer Verschmutzung einfach zu reinigen. Weiterhin bietet die Ausbildung als Magnetboard / Spiegelfläche einen deutlichen Mehrwert und verleiht dem sonst nutzlosen Freiraum eine technische und auch eine ästhetische Zusatzfunktion.

### INDUSTRIELLE ANWENDBARKEIT

Küchenrollenhalter sind stets so angeordnet und an Wänden aufgehängt, dass ein angrenzender Freiraum zum Abwickeln der jeweiligen Rolle gewährleistet ist. Dieser Raum bleibt nachteilig ungenutzt und verschmutzt häufig. Es gilt, diesen Nachteil zu überwinden.

Die Lösung erfolgt durch einen Küchenrollenhalter in U-form, bei dem der wandseitige Schenkel des U's den notwendigen Freiraum an der Wand flächig mit einer Platte abdeckt, welche eine Zusatzfunktion bietet. Im Küchenbereich kann eine als Magnetboard und/oder Spiegelfläche ausgebildete Platte sinnvoll und einfach reinigbar der Freifläche einen geldwerten, technischen und ästhetischen Zusatznutzen verleihen, der eine deutlich erhöhte Wohnqualität bereitstellen kann.

## Patentansprüche

1. Küchenrollenhalter für aufgewickelte Material-Bahnen mit Hohlzylinder-Kern, wobei der Küchenrollenhalter einen flachen, vom Nutzer her betrachtet vorderseitig auskragenden Außenwandabschnitt mit Kreisbogenprofil aufweist, wobei wiederum die Halterungsposition einer neuen Küchenrolle konzentrisch zum Kreisbogenprofil angeordnet ist und eine neue Küchenrolle in gehalterter Position in der konkaven, innenseitigen Wölbung des Kreisbogenprofils angeordnet ist, **dadurch gekennzeichnet, dass** der Außenwandabschnitt rückseitig und vom Nutzer her betrachtet hinter der Küchenrolle in eine flächig erstreckte Platte übergeht, welche eine Zusatzfunktion aufweist.

2. Küchenrollenhalter nach dem vorhergehenden Anspruch, **dadurch gekennzeichnet, dass** die Platte mindestens eine Zusatzfunktion aufweist, welche ausgewählt ist aus der Gruppe bestehend aus Notizfläche, Magnetboardfläche, Whiteboardfläche, Spiegelfläche, Leuchtglasfläche, Thermometer-Anzeige-Fläche, LED-Uhr-Anzeigefläche, Touchscreen-Schalterfläche, Hygrometer-Anzeigefläche, LED-Bildschirm-Anzeigefläche, Leuchtglasfläche mit einstellbaren und/oder regelbaren Lichtquellen.

3. Küchenrollenhalter nach einem der vorhergehenden Ansprüche, **dadurch gekennzeichnet, dass** das Kreisbogenprofil aus gebogenem Edelstahlblech besteht.

4. Küchenrollenhalter nach einem der vorhergehenden Ansprüche, **dadurch gekennzeichnet, dass** die Platte aus Edelstahlblech besteht.

5. Küchenrollenhalter nach einem der vorhergehenden Ansprüche, **dadurch gekennzeichnet, dass** Kreisbogenprofil und Platte aus dem gleichen Material bestehen.

6. Küchenrollenhalter nach dem vorhergehenden Anspruch, **dadurch gekennzeichnet, dass** Kreisbogenprofil und Platte aus einem durchgehenden, kontinuierlichen Materialabschnitt bestehen.

7. Küchenrollenhalter nach einem der vorhergehenden Ansprüche, **dadurch gekennzeichnet, dass** der Küchenrollenhalter mindestens eine weitere Baugruppe aufweist, welche ausgewählt ist aus der Gruppe bestehend aus Abreißkante, Abschneidkante, Abreißklinge, Schneidmechanik, Rollenschneider, Hebelschneider, Rollen-Halterungsdorn, austauschbare Abrollachse, Frontklappe mit Abrollschlitz, rückseitige Wandbefestigungsöse, rückseitige Aufhängeöse, Standfuß, Standfußaufnahme.

8. Küchenrollenhalter nach einem der vorhergehenden Ansprüche, **dadurch gekennzeichnet, dass** der Küchenrollenhalter eine weitere Rollenaufnahme für eine weitere Rolle aufweist.

9. Küchenrollenhalter nach einem der vorhergehenden Ansprüche, **dadurch gekennzeichnet, dass** der Küchenrollenhalter ein Magazin für Ersatzrollen und/oder Ersatz-Küchenrollen aufweist.

10. Küchenrollenhalter für aufgewickelte Material-Bahnen mit Hohlzylinder-Kern nach einem der vorhergehenden Ansprüche, wobei der Küchenrollenhalter ein flächig erstrecktes, vom Nutzer her betrachtet vorderseitig auskragendes Kreisbogenprofil aufweist und die Halterungsposition einer neuen Küchenrolle konzentrisch zum Kreisbogenprofil angeordnet ist und eine neue Küchenrolle in gehalterter Position in der konkaven, innenseitigen Wölbung des Kreisbogenprofils angeordnet ist, wobei weiterhin das Kreisbogenprofil rückseitig und vom Nutzer her betrachtet hinter der Küchenrolle in eine flächig erstreckte Platte mit rückseitiger Wandbefestigung übergeht, wobei die Platte vorderseitig als Notizfläche, Magnetboardfläche und/oder Spiegelfläche ausgebildet ist, wobei wiederum das Kreisbogenprofil aus gebogenem Edelstahlblech besteht, die Platte aus Edelstahlblech besteht und Kreisbogenprofil und Platte aus einem durchgehenden, kontinuierlichen Materialabschnitt bestehen.
